# EUROPÄISCHE PATENTSCHRIFT

(11) **EP 0 456 993 B1**
(45) Veröffentlichungstag und Bekanntmachung des Hinweises auf die Patenterteilung: **10.08.1994**
(21) Anmeldenummer: 91104417.0
(22) Anmeldetag: 21.03.1991
(51) Int. Cl.: B60K 11/08, B60K 11/04

(54) **Vorrichtung zur sicheren Abdeckung von Luftöffnungen in Sonderfahrzeugen**
Safety covering device for air openings in special-purpose vehicle
Dispositif pour recouvrir avec sécurité des ouvertures d'air

(30) Priorität: 12.05.1990 DE 4015304
(43) Veröffentlichungstag der Anmeldung: 21.11.1991
(73) Patentinhaber: Fried. Krupp AG Hoesch-Krupp, 44145 Dortmund (DE)
(72) Erfinder: Dieterich, Günter, W-4600 Dortmund 41 (DE); Piel, Karlheinz, Dipl.-Ing., W-5840 Schwerte (DE); Schulte, Hans-Werner, W-5840 Schwerte 3 (DE); Willmes, Günther, Paul, Dipl.-Ing., W-4600 Dortmund 30 (DE)

(56) Entgegenhaltungen:
- EP-A- 0 308 901
- DE-A- 2 449 574
- DE-A- 3 703 716
- GB-A- 2 121 734
- US-A- 4 335 797

## Beschreibung

Die Erfindung betrifft eine Vorrichtung zur Abdeckung von Luftöffnungen in Sonderfahrzeugen gemäß dem Oberbegriff des Anspruchs 1. Eine derartige Vorrichtung ist aus der DE-OS 37 03 716 bekannt.

Sonderfahrzeuge, die im sogenannten off-road-Betrieb eingesetzt sind, haben den Motorenraum einschließlich Kühlsystem des öfteren abgekapselt, um so einen Ausfall des Fahrzeuges durch Beschädigung dieser Teile des Antriebssystems durch Eindringen von Fremdkörpern zu vermeiden. Die Versorgung des Motors mit Verbrennungsluft und mit Kühlluft wird dabei üblicherweise über Schutzgittersysteme sichergestellt. Im üblichen haben diese Motorenräume zur Be- und Entlüftung zwei dieser sogenannten Grätings, wobei im Bereich der Luftzuführung (Einlaßgräting) ein Ventilator die benötigten Luftmengen ansaugt und im Bereich der Auslaßgräting ein freies Ausströmen der verbrauchten Luft möglich ist.

Die Anforderungen, die somit an entsprechende Schutzvorrichtungen gestellt werden, sind eine hinreichend große Öffnung des Gesamtsystems für den erforderlichen Luftdurchsatz und die Ausbildung der Luftkanäle dergestalt, daß ein Eindringen von Fremdkörpern verhindert werden kann.

Der Einsatz von derartigen Gräting-Systemen im Fahrzeugbau ist aus der DE-OS 37 03 716 bekannt, wobei Profilleisten der eingangs genannten Art Verwendung finden, die am zum Inneren des Fahrzeugs weisenden Ende jeweils zusätzliche Profile bzw. Profilteile aufweisen, von denen Teile im wesentlichen quer zum Ende der Profilleisten angeordnet sind, um auch vagabundierende Splitter von Fremdkörpern vom Inneren des Fahrzeugs fernhalten zu können. Diese bekannten Vorrichtungen sind aber noch nicht optimal ausgebildet.

Von daher liegt der Erfindung die Aufgabe zugrunde, diese bekannten Gräting-Systeme in dem Sinne zu optimieren, daß die Eindringsicherheit gegen Fremdkörper erhöht wird bei gleichzeitig verbessertem Luftdurchlaß.

Nach der Erfindung wird die Aufgabe durch die im kennzeichnenden Teil des Anspruchs 1 angegebenen Merkmale gelöst.

Vorteilhafte Ausführungs- und Herstellungsformen sind in den Ansprüchen 2 bis 21 angegeben.

Die Vorteile der Vorrichtung nach der Erfindung sind insbesondere darin zu sehen, daß durch die Kombination von Werkstoffen/Materialien mit unterschiedlichen physikalischen und chemischen einschließich thermischer und radiologischer Eigenschaften für den als Profilleisten eingesetzten Verbundwerkstoff die Sicherheit gegen Eindringen von Fremdkörpern gegenüber den bekannten Grätings entscheidend erhöht wird, da z. B. bei Kombination von Werkstoffen mit extrem hoher Härte und geringer Zähigkeit mit Werkstoffen mit geringer Härte aber hoher Zähigkeit auftreffende Fremdkörper zuerst durch die Werkstoffe mit hoher Zähigkeit aufgefangen werden. Dadurch kann auch unter Berücksichtigung der Profilform der Abstand der einzelnen Profilleisten zueinander vergrößert werden, was zu einer Material- und Gewichtseinsparung und zu einer Verbesserung des Luftdurchlasses führt.

In der Zeichnung sind Ausführungsbeispiele der Vorrichtung nach der Erfindung schematisch dargestellt. Es zeigt:
- Fig. 1: eine Ausführungsform im Schnitt,
- Fig. 2: eine zweite Ausführungsform im Schnitt,
- Fig. 3: eine dritte Ausführungsform im Schnitt,
- Fig. 4: eine weitere Ausführungsform im Schnitt,
- Fig. 5: eine weitere Ausführungsform im Schnitt,
- Fig. 6: eine andere Ausführungsform im Schnitt,
- Fig. 7: eine andere Ausführungsform im Schnitt,
- Fig. 8: eine andere Ausführungsform im Schnitt.

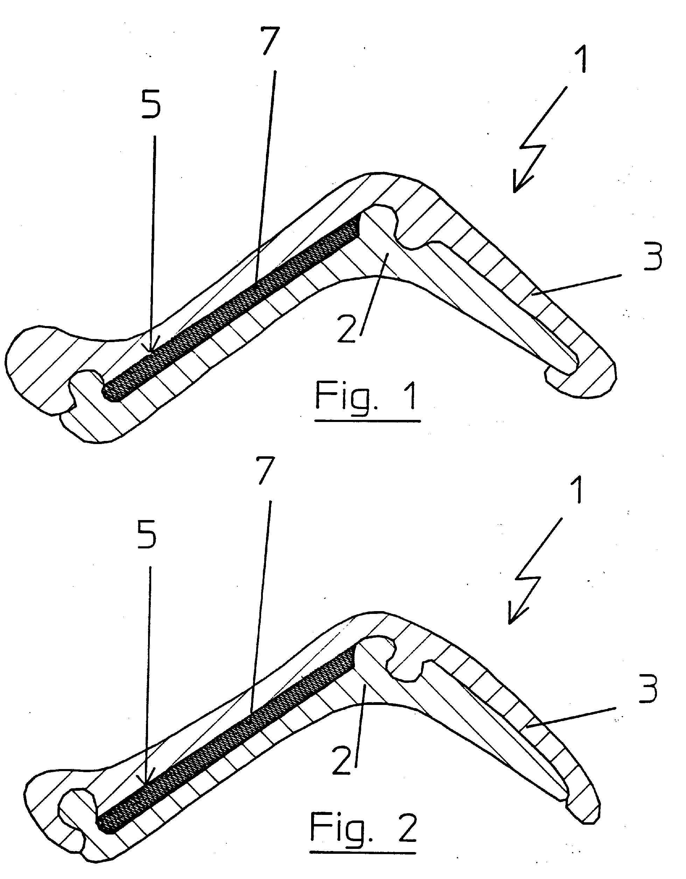

Wie aus den Fig. 1 bis 8 hervorgeht, bestehen die für die Bildung einer nicht dargestellten kompletten erfindungsgemäßen Vorrichtung erforderlichen Profilleitsten 1 jeweils aus einem Verbundwerkstoff, der außenliegende korrespondierende Einzelprofile 2, 3, 4 unterschiedlichster Form und dazwischen angeordnete Freiräume 5, 6, die ganz oder teilweise mit Sandwichelementen 7, 8 ausgefüllt sind, aufweist, wobei die Einzelprofile 2, 3, 4 durch Ineinanderstecken miteinander verbunden sind.

Die Fig. 1 bis 4 zeigen Profilleisten 1 mit jeweils zwei außenliegenden Einzelprofilen 2, 3 und jeweils einem einseitig angeordneten Freiraum 5, der jeweils mit einem Sandwichelement 7 ausgefüllt ist, wobei die Einzelprofile 2, 3 die unterschiedlichsten Formen aufweisen.

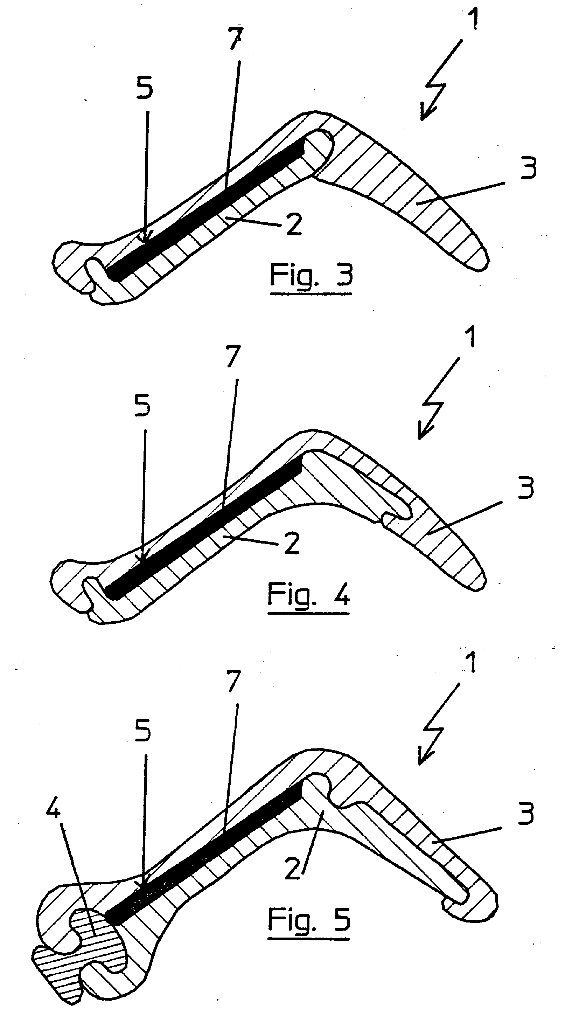

Die Fig. 5 zeigt eine Profilleiste 1, die aus drei außenliegenden Einzelprofilen 2, 3, 4 mit einem einseitig angeordneten Freiraum 5, der mit einem Sandwichelement 7 ausgefüllt ist, besteht.

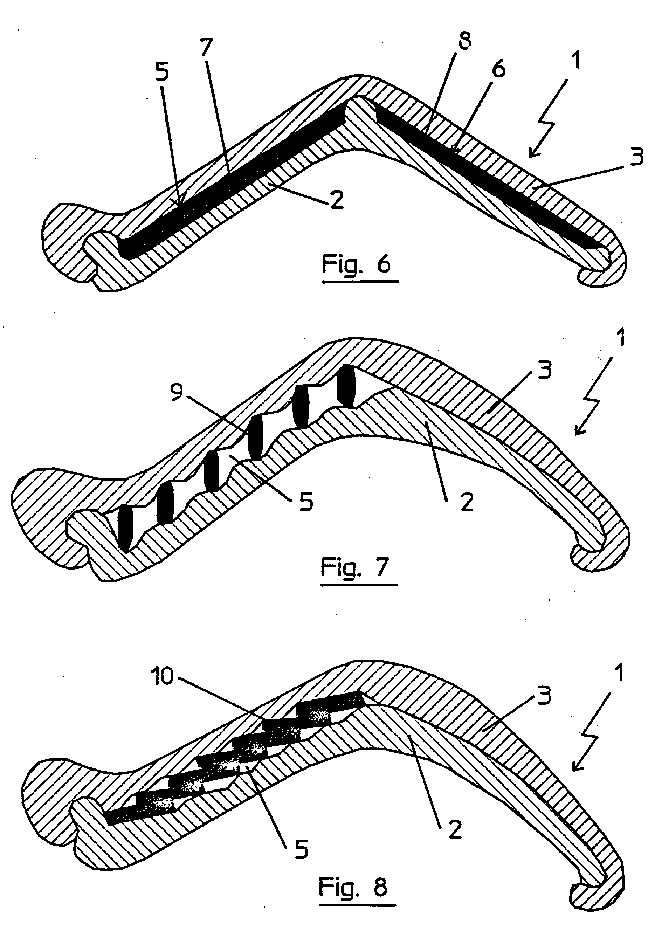

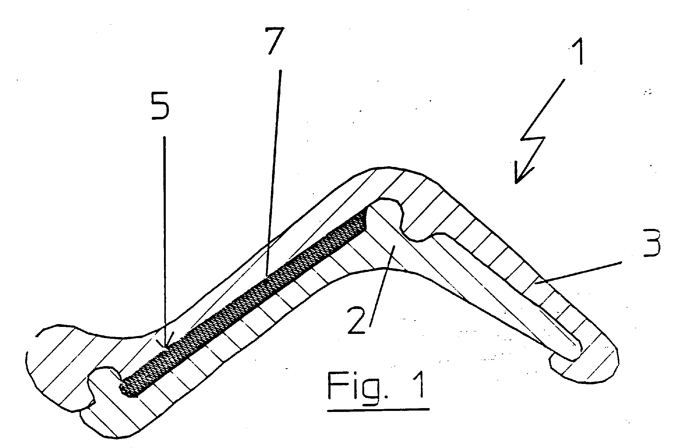

In der Fig. 6 ist eine Profilleiste 1 mit zwei außenliegenden Einzelprofilen 2, 3 und beidseitig zwischen diesen angeordneten Freiräumen 5, 6, die mit Sandwichelementen 7, 8 ausgefüllt sind, dargestellt.

Die Fig. 7 zeigt eine Profilleiste 1 aus zwei außenliegenden Einzelprofilen 2, 3 mit einem einseitig zwischen diesen angeordneten Freiraum 5, der zum Teil stegförmige Sandwichelemente 9 aufweist.

Schließlich ist in der Fig. 8 eine Profilleiste 1 mit zwei außen liegenden Einzelprofilen 2, 3 und einem einseitig vorgesehenen Freiraum 5 dargestellt, wobei der Freiraum 5 teilweise mit schuppenförmig angeordneten Sandwichelementen 10 ausgefüllt ist.

Im übrigen ist dieser Verbundwerkstoff auch grundsätzlich in anderen Be-/Entlüftungs- und Bewehrungsgittern in Fluiden zur Verbesserung gegen Eindring- und Schlagwirkung einsetzbar.
- 1: Pofilleisten
- 2: Einzelprofil
- 3: Einzelprofil
- 4: Einzelprofil
- 5: Freiraum
- 6: Freiraum
- 7: Sondwichelement
- 8: Sandwichelement
- 9: Sandwichelement
- 10: Sandwichelement

## Patentansprüche

1. Vorrichtung zur Abdeckung von Luftöffnungen in Sonderfahrzeugen mit parallel so zueinander, den Zwischenraum zwischen sich überdeckend angeordneten, im Querschnitt winkel-, T- oder S-förmig gekrümmten Profilleisten, daß ein Eindringen von Fremdkörpern vermieden werden kann, dadurch gekennzeichnet, daß die Profilleisten (1) jeweils aus einem Schichtverbundwerkstoff bestehen, der aus Einzelprofilen (2, 3, 4) zusammengefügt ist.

2. Vorrichtung nach Anspruch 1, dadurch gekennzeichnet, daß der Schichtverbundwerkstoff aus mindestens zwei außenliegenden Einzelprofilen (2, 3) besteht.

3. Vorrichtung nach Anspruch 1 oder 2, dadurch gekennzeichnet, daß mindestens die außenliegenden Einzelprofile (2, 3, 4) des Schichtverbundwerkstoffes aus einem oder mehreren Grundwerkstoffen bestehen.

4. Vorrichtung nach Anspruch 3, dadurch gekennzeichnet, daß die Grundwerkstoffe Stahl und sonstige Fe-Legierungen, andere Metalle und Metallegierungen, Cermets, Hartmetalle und/oder keramische Werkstoffe sind, die behandelt und/oder unbehandelt sind.

5. Vorrichtung nach einem oder mehreren der Ansprüche 1 bis 4, dadurch gekennzeichnet, daß die zwischen den außenliegenden Einzelprofilen (2, 3, 4) des Schichtverbundwerkstoffes liegende Schicht aus Freiräumen (5, 6) beliebiger Form und Lage gebildet ist.

6. Vorrichtung nach Anspruch 5, dadurch gekennzeichnet, daß die Freiräume (5, 6) ganz oder teilweise mit Sandwichelementen (7, 8, 9, 10) ausgefüllt sind.

7. Vorrichtung nach einem oder mehreren der Ansprüche 1 bis 6, dadurch gekennzeichnet, daß die außenliegenden Einzelprofile (2, 3, 4) aus mehreren Profilteilen bestehen.

8. Vorrichtung nach einem oder mehreren der Ansprüche 1 bis 7, dadurch gekennzeichnet, daß die Freiräume (5, 6) ein- oder beidseitig über die Breite der Profilleiste (1) gesehen angeordnet sind.

9. Vorrichtung nach einem oder mehreren der Ansprüche 1 bis 8, dadurch gekennzeichnet, daß die die Freiräume (5, 6) umschließenden Einzelprofile (2, 3, 4) lösbar und/oder unlösbar miteinander verbunden sind.

10. Vorrichtung nach Anspruch 9, dadurch gekennzeichnet, daß die Profilausbildung der Einzelprofile (2, 3, 4) derart gestaltet ist, daß diese zusammensteckbar und/oder durch Schweißen, Löten, Kleben oder dgl. verbindbar sind.

11. Vorrichtung nach einem oder mehreren der Ansprüche 1 bis 10, dadurch gekennzeichnet, daß die Übergänge der Einzelprofile (2, 3, 4) zueinander mit organischen oder anorganischen Stoffen beschichtet sind.

12. Vorrichtung nach einem oder mehreren der Ansprüche 1 bis 11, dadurch gekennzeichnet, daß die in die Freiräume (5, 6) eingebrachten Sandwichelemente (7, 8, 9, 10) aus Metallen bzw. Metallegierungen und/ oder keramischen Werkstoffen und/oder Cermets (einschl. Hartmetallen) und/oder organischen und/oder anorganischen Verbindungen bestehen.

13. Vorrichtung nach einem oder mehreren der Ansprüche 1 bis 12, dadurch gekennzeichnet, daß Form und Aufbau der Sandwichelemente (7, 8, 9, 10) aus platten- oder wellenförmigen oder ovalen oder runden oder kugeligen oder rechteckigen/quadratischen oder anderweitig eckigen oder Kombinationen dieser Materialformen bestehen.

14. Vorrichtung nach einem oder mehreren der Ansprüche 1 bis 13, dadurch gekennzeichnet, daß bei Kombinationen von verschiedenen Werkstoffen und/oder Formen beim Aufbau eines Sandwichelementes (7, 8, 9, 10) diese lösbar oder unlösbar verbunden sind.

15. Vorrichtung nach einem oder mehreren der Ansprüche 1 bis 14, dadurch gekennzeichnet, daß die Lage der Sandwichelemente (7 bis 10) in den Freiräumen (5, 6) stab- oder wellen- oder steg- oder schuppenförmig oder in Kombinationen dieser Lagemöglichkeiten ist.

16. Vorrichtung nach einem oder mehreren der Ansprüche 1 bis 15, dadurch gekennzeichnet, daß die die Freiräume (5, 6) umschließenden Einzelprofile (2, 3, 4) mit den Sandwichelementen (7 bis 10) ganz oder teilweise lösbar oder unlösbar verbunden sind, wobei verbleibende Freiräume (5, 6) zwischen den die Freiräume (5, 6) bildenden Einzelprofilen (2, 3, 4) und den Sandwichelementen (7 bis 10) als Freiräume (5, 6) beibehalten bleiben oder mit organischen oder anorganischen Stoffen ausgefüllt.

17. Vorrichtung nach einem oder mehreren der Ansprüche 1 bis 16, dadurch gekennzeichnet, daß die die Freiräume (5, 6) bildenden Einzelprofile (2, 3, 4) in ihrer Profilausbildung so gestaltet sind, daß sich die Sandwichelemente (7 bis 10) innen und/oder außen befinden.

18. Vorrichtung nach einem oder mehreren der Ansprüche 1 bis 17, dadurch gekennzeichnet, daß die Einzelprofile (2, 3, 4) des Verbundwerkstoffes durch Warm- oder Kaltumformung, vorzugsweise durch Strangpressen, durch spanende Fertigung und/oder unter Anwendung von anderen Fertigungstechniken wie z. B. Sintern, aber auch durch Kombination dieser verschiedenen Herstellungsverfahren miteinander hergestellt sind.

19. Vorrichtung nach einem oder mehreren der Ansprüche 1 bis 18, dadurch gekennzeichnet, daß je nach den erforderlichen Eigenschaften und der Auslegung des Grundwerkstoffes (weich oder hart) für die Einzelprofile (2, 3, 4) als Werkstoffe für die Sandwichelemente (7 bis 10) in den Freiräumen (5, 6) Stahl und sonst. Fe-Legierungen, andere Metalle bzw. Metallegierungen, Cermets, Hartmetalle, keramische Werkstoffe, Gummi bzw. gummiartige Werkstoffe, Glas, sonst. organische und anorganische Verbindungen oder Kombinationen dieser Werkstoffe untereinander Verwendung finden, wobei die Werkstoffe behandelt und/oder unbehandelt sind.

20. Vorrichtung nach einem oder mehreren der Ansprüche 1 bis 19, dadurch gekennzeichnet, daß die Sandwichelemente (7 bis 10) in den Freiräumen (5, 6) je nach Werkstofftyp bzw. zu erreichenden Eigenschaften neben den Verbindungen bei Kombinationen der Werkstoffe durch Legen, Fugen, Kleben, Schweißen, Löten, Steck- und Schraubverbindungen zur Herstellung der einzelnen Werkstoffe/ Kombinationen durch Herstellverfahren wie Kleben, "Backen"/Sintern, Einschäumen, Ausgießen/-spritzen, Schweißen, Löten, sonst. mechanisch lösbar und unlöslichen Verbindungen oder durch Kombinationen dieser Verfahren hergestellt sind.

21. Vorrichtung nach einem oder mehreren der Ansprüche 1 bis 20, dadurch gekennzeichnet, daß die Sandwichelemente (7 bis 10) in den Freiräumen (5, 6) durch Einlegen/Auflegen, Einpassen, Einschieben/ -stecken, Schweißen, Kleben, Sintern, Löten, Einspritzen/ -schäumen oder durch Kombination dieser Verfahren mit den Einzelprofilen (2, 3, 4) verbunden sind, wobei unausgefüllt bleibende Freiräume (5, 6) zwischen den Einzelprofilen (2, 3, 4) und den Sandwichelementen (7 bis 10) als Freiraum bestehen bleiben oder mit organischen und/oder anorganischen Stoffen ausgefüllt sind.

## Revendications

1. Dispositif pour recouvrir des ouvertures de ventilation de véhicules spéciaux, avec languettes profilées cintrées disposées parallèlement les unes aux autres, de manière à masquer l'interstice entre elles, présentant en coupe transversale une forme en angle, en T ou en S, de telle sorte que la pénétration de corps étrangers peut être évitée, caractérisé en ce que les languettes profilées (1) sont chacune constituées d'un matériau composite en couches, qui est formé de l'assemblage de profilés élémentaires (2, 3, 4).

2. Dispositif selon la revendication 1, caractérisé en ce que le matériau composite en couches est constitué d'au moins deux profilés élémentaires (2, 3) disposés à l'extérieur.

3. Dispositif selon la revendication 1 ou 2, caractérisé en ce qu'au moins les profilés élémentaires (2, 3, 4) situés à l'extérieur du matériau composite en couches sont constitués d'un ou de plusieurs matériaux de base.

4. Dispositif selon la revendication 3, caractérisé en ce que les matériaux de base sont de l'acier et des alliages spéciaux de fer, d'autres métaux et alliages de métaux, des cermets, des métaux durs et/ou de matériaux céramiques, qui sont traités et/ou non traités.

5. Dispositif selon l'une ou plusieurs des revendications 1 à 4, caractérisé en ce que la couche située entre les profilés élémentaires (2, 3, 4) situés à l'extérieur du matériau composite en couches est formée d'espaces libres (5, 6) de forme et de position quelconques.

6. Dispositif selon la revendication 5, caractérisé en ce que les espaces libres (5, 6) sont totalement ou partiellement remplis d'éléments en sandwich (7, 8, 9, 10).

7. Dispositif selon l'une ou plusieurs des revendications 1 à 6, caractérisé en ce que les profilés élémentaires (2, 3, 4) situés à l'extérieur sont constitués de plusieurs éléments du profilés.

8. Dispositif selon l'une ou plusieurs des revendications 1 à 7, caractérisé en ce que les espaces libres (5, 6) sont disposés d'un ou des deux côtés sur la largeur des languettes profilées (1).

9. Dispositif selon l'une ou plusieurs des revendications 1 à 8, caractérisé en ce que les profilés élémentaires (2, 3, 4) entourant les espaces libres (5, 6) sont reliés les uns aux autres de manière démontable et/ou non démontable.

10. Dispositif selon la revendication 9, caractérisé en ce que la forme du profil des profilés élémentaires (2, 3, 4) est telle que ceux-ci sont emboîtables et/ou peuvent être assemblés par soudage, brasage, collage ou similaires.

11. Dispositif selon l'une ou plusieurs des revendications 1 à 10, caractérisé en ce que les transitions entre les profilés individuels (2, 3, 4) sont recouvertes de matériaux organiques ou inorganiques.

12. Dispositif selon l'une ou plusieurs des revendications 1 à 11, caractérisé en ce que les éléments en sandwich (7, 8, 9, 10) placés dans les espaces libres (5, 6) sont constitués de métaux ou d'alliages de métaux et/ou de matériaux céramiques et/ou de cermets (y compris métaux durs) et/ou de composés organiques et/ou de composés inorganiques.

13. Dispositif selon l'une ou plusieurs des revendications 1 à 12, caractérisé en ce que la forme et la construction des éléments en sandwich (7, 8, 9, 10) résultent de formes de matériaux plates, ou ondulées, ou ovales, ou rondes, ou sphériques, ou rectangulaires/carrées, ou présentent d'autres angles, ou d'une combinaison de ces formes.

14. Dispositif selon l'une ou plusieurs des revendications 1 à 13, caractérisé en ce qu'au montage d'un élément en sandwich (7, 8, 9, 10), en cas de combinaisons de différents matériaux et/ou formes, ceux-ci sont reliés de manière démontable ou non démontable.

15. Dispositif selon l'une ou plusieurs des revendications 1 à 14, caractérisé en ce que les éléments en sandwich (7 à 10) sont disposés dans les espaces libres (5, 6) sous la forme de barreaux, ou d'ondulations, ou de pattes, ou de coupelles ou d'une combinaison de ces dispositions possibles.

16. Dispositif selon l'une ou plusieurs des revendications 1 à 15, caractérisé en ce que les profilés élémentaires (2, 3, 4) entourant les espaces libres (5, 6) sont reliés aux éléments en sandwich (7 à 10) de manière totalement ou partiellement démontable ou non démontable, tandis que des espaces libres (5, 6) restant entre les profilés élémentaires (2, 3, 4) formant les espaces libres (5, 6), et les éléments en sandwich (7 à 10), sont conservés comme espaces libres (5, 6) ou sont remplis de matériaux organiques ou inorganiques.

17. Dispositif selon l'une ou plusieurs des revendications 1 à 16, caractérisé en ce que les profilés élémentaires (2, 3, 4) formant les espaces libres (5, 6) ont une forme profilée telle que les éléments en sandwich (7 à 10) sont situés à l'intérieur et/ou à l'extérieur.

18. Dispositif selon l'une ou plusieurs des revendications 1 à 17, caractérisé en ce que les profilés élémentaires (2, 3, 4) du matériau composite sont fabriqués par formage à chaud ou à froid, de préférence par extrusion, par usinage et/ou en recourant à d'autres techniques de fabrication telles que par exemple le frittage, mais aussi par combinaison de ces différents procédés de fabrication les uns avec les autres.

19. Dispositif selon l'une ou plusieurs des revendications 1 à 18, caractérisé en ce que, suivant les propriétés nécessaires et la conception du matériau de base (dur ou mou) des profilés élémentaires (2, 3, 4), des matériaux pouvant être utilisés pour les éléments en sandwich (7 à 10) dans les espaces libres (5, 6) sont l'acier et des alliages spéciaux de fer, d'autres métaux ou alliages de métaux, des cermets, des métaux durs, des matériaux céramiques, du caoutchouc et des matériaux caoutchouteux, du verre, des composés spéciaux organiques et inorganiques ou des combinaisons de ces matériaux entre eux, ces matériaux étant traités et/ou non traités.

20. Procédé selon l'une ou plusieurs des revendications 1 à 19 caractérisé en ce que, suivant le type de matériaux ou les propriétés à atteindre, les éléments en sandwich (7 à 10) dans les espaces libres (5, 6) sont, en plus des assemblages par combinaisons des matériaux par pose, assemblage, collage, soudage, brasage, par assemblage par emboîtage et vissage en vue de la fabrication des matériaux individuels et/ou combinaisons, fabriqués par des procédés de fabrication tels que collage, cuisson/frittage, projection de mousse, moulage/injection, soudage, brasage, assemblages mécaniques spéciaux démontables et non démontables ou par combinaison de ces procédés.

21. Dispositif selon l'une ou plusieurs des revendications 1 à 20 caractérisé en ce que les éléments en sandwich (7 à 10) des espaces libres (5, 6) sont reliés aux profilés élémentaires (2, 3, 4) par insertion/superposition, adaptation, glissage/insertion, soudage, collage, frittage, brasage, injection/injection de mousse ou par combinaison de ces procédés, tandis que les espaces libres (5, 6) restant non remplis entre les profilés élémentaires (2, 3, 4) et les éléments en sandwich (7 à 10) sont conservés comme espaces libres ou sont remplis de matériaux organiques et/ou inorganiques.

## Claims

1. Device for covering air holes in special vehicles with profile strips which are arranged parallel to one another and overlapping the space between them and are bent in an angular, T or S shape so that penetration of foreign bodies can be avoided, characterised in that the profile strips (1) are each made from a laminar composite material which is composed of individual profiles (2, 3, 4).

2. Device according to Claim 1, characterised in that that the laminar composite material consists of at least two outer individual profiles (2, 3).

3. Device according to Claim 1 or 2, characterised in that at least the outer individual profiles (2, 3, 4) of the laminar composite material consist of one or more basic materials.

4. Device according to Claim 3, characterised in that the basic materials are steel and other Fe alloys, other metals and metal alloys, cermets, hard metals and/or ceramic materials which are treated and/or untreated.

5. Device according to one or more of Claims 1 to 4, characterised in that the layer of free spaces (5, 6) lying between the outer individual profiles (2, 3, 4) of the laminar composite material is formed in any shape and position.

6. Device according to Claim 5, characterised in that the free spaces (5, 6) are totally or partially filled with sandwich elements (7, 8, 9, 10).

7. Device according to one or more of Claims 1 to 6, characterised in that the outer individual profiles (2, 3, 4) consist of a plurality of profile parts.

8. Device according to one or more of Claims 1 to 7, characterised in that the free spaces (5, 6) are arranged on one or both sides when viewed over the width of the profile strip (1).

9. Device according to one or more of Claims 1 to 8, characterised in that the individual profiles (2, 3, 4) surrounding the free spaces (5, 6) are detachably and/or undetachably connected to one another.

10. Device according to Claim 9, characterised in that the profiling of the individual profiles (2, 3, 4) is constructed in such a way that they can be put together and/or connected by welding, soldering, glueing or the like.

11. Device according to one or more of Claims 1 to 10, characterised in that the junctions of the individual profiles (2, 3, 4) with one another are coated with organic or inorganic substances.

12. Device according to one or more of Claims 1 to 11, characterised in that the sandwich elements (7, 8, 9, 10) introduced into the free spaces (5, 6) are made from metals or metal alloys and/or ceramic materials and/or cermets (including hard metals) and/or organic and/or inorganic compounds.

13. Device according to one or more of Claims 1 to 12, characterised in that in shape and construction the sandwich elements (7, 8, 9, 10) consist of plate-shaped or corrugated or oval or round or spherical or rectangular/square or other angular material shapes or combinations thereof.

14. Device according to one or more of Claims 1 to 13, characterised in that in the case of combinations of different materials and/or shapes in the construction of a sandwich element (7, 8, 9, 10) these are connected detachably or undetachably.

15. Device according to one or more of Claims 1 to 14, characterised in that the sandwich elements (7 to 10) are positioned in the free spaces (5, 6) like bars or corrugations or webs or scales or in combinations of these positioning possibilities.

16. Device according to one or more of Claims 1 to 15, characterised in that the individual profiles (2, 3, 4) surrounding the free spaces (5, 6) are totally or partially detachably or undetachably connected to the sandwich elements (7 to 10), remaining free spaces (5, 6) between the individual profiles (2, 3, 4) which form the free spaces (5, 6) and the sandwich elements (7 to 10) are retained as free spaces (5, 6) or are filled with organic or inorganic substances.

17. Device according to one or more of Claims 1 to 16, characterised in that the individual profiles (2, 3, 4) forming the free spaces (5, 6) are constructed in such a way that the sandwich elements (7 to 10) are located inside and/or outside.

18. Device according to one or more of Claims 1 to 17, characterised in that the individual profiles (2, 3, 4) of the composite material are produced by hot or cold shaping, preferably by extrusion moulding, by machining and/or by the use of other manufacturing techniques such as for example sintering, but also by combination of these different production processes with one another.

19. Device according to one or more of Claims 1 to 18, characterised in that depending upon the necessary properties and the nature of the basic material (soft or hard) for the individual profiles (2, 3, 4) as materials for the sandwich elements (7 to 10) in the free spaces (5, 6) steel and other Fe alloys, other metals or metal alloys, cermets, hard metals, ceramic materials, rubber or rubber-like materials, glass, other organic and inorganic compounds or combinations of these materials with one another can be used, the materials being treated and/or untreated.

20. Device according to one or more of Claims 1 to 19, characterised in that depending upon the type of material or the properties to be achieved the sandwich elements (7 to 10) in the free spaces (5, 6) are produced in addition to the connections in combinations of the materials by laying, jointing, glueing, welding, soldering, plug and screw connections for production of the individual materials/ combinations by production processes such as glueing, "baking"/sintering, foaming in, pouring/spraying, welding, soldering, other mechanically detachable and undetachable connections or by combinations of these processes.

21. Device according to one or more of Claims 1 to 20, characterised in that the sandwich elements (7 to 10) in the free spaces (5, 6) are connected to the individual profiles (2, 3, 4) by laying in/on, fitting in, pushing/plugging in, welding, glueing, sintering, soldering, injection/foaming in or by combination of these processes, wherein free spaces (5, 6) which remain unfilled between the individual profiles (2, 3, 4) and the sandwich elements (7 to 10) remain as free spaces or are filled with organic and/or inorganic substances.
